# DEMANDE DE BREVET EUROPEEN

(11) **EP 4 734 129 A1**
(43) Date de publication de la demande: **29.04.2026**
(21) Numéro de dépôt: 25207310.1
(22) Date de dépôt: 07.10.2025
(51) Int. Cl.: H01B 3/44, C08K 3/34, C08K 5/057, H01B 13/14

(54) **COUCHE ELECTRIQUEMENT ISOLANTE POUR CABLE ELECTRIQUE A HAUTE TENSION COMPRENANT DES NANOCHARGES MINERALES GENEREES IN SITU LORS DE SA PREPARATION**

(30) Priorité: 07.10.2024 FR 2410782
(71) Demandeur: Nexans, 92400 Courbevoie (FR); Université Claude Bernard Lyon I, 69100 Villeurbanne (FR); Institut National des Sciences Appliquées de Lyon (Insa Lyon), 69100 Villeurbanne (FR); Université Jean Monnet Saint-Étienne, 42100 Saint-Étienne (FR); Centre National de la Recherche Scientifique, 75016 Paris (FR)
(72) Inventeur: LARCHE, Jean-François, 92400 Courbeboie (FR); HALLER, Servane, 92400 Courbeboie (FR); GAILLARD, Camille, 78180 Montigny-le-Bretonneux (FR); BOUNOR-LEGARE, Véronique, 69006 Lyon (FR); SERGHEI, Anatoli, 69300 Caluire-et-Cuire (FR); YLLA, Noëllie, 01800 Meximieux (FR)
(74) Mandataire: Cabinet Boettcher

(57) **Abrégé**

La présente invention concerne un procédé de préparation d'un câble électrique comprenant une étape d'application d'une couche électriquement isolante autour d'au moins un élément électriquement conducteur allongé à partir d'une composition polymère, où des précurseurs minéraux sont introduits dans la composition polymère préalablement à ladite application, qui sont ensuite convertis sous forme de particules minérales. L'invention concerne également les câbles tels qu'obtenus selon ce procédé qui comprennent des particules minérales au sein de leur couche électriquement isolante, et qui sont particulièrement bien adaptés au transport de courant continu à moyenne ou haute tension.

## Description

La présente invention concerne le domaine des câbles électriques destinés au transport d'électricité (câble d'énergie). Plus précisément, elle a trait à des câbles comportant des couches à caractère électriquement isolant à base d'une matrice polymère incluant des matériaux, contenant des liaisons inorganiques, dispersés assurant le rôle de charges (fillers).

Dans la présente description, à des fins de concisions, ce type de matériau dispersé assurant le rôle de charges mécaniques est désigné par le terme générique de « charge ». Sans mention contraire, le terme « charge » désigne ce type de charge mécanique et est à distinguer notamment d'une charge électrique. Il s'agit typiquement de particules contenant des liaisons inorganiques de faibles dimensions, dites « charges minérales ».

L'incorporation de charges dans une couche électriquement isolante d'un câble électrique permet d'améliorer les performances de cette couche. Elles peuvent notamment améliorer les propriétés mécaniques et/ou thermiques de la couche. Dans les câbles d'énergie destinés au transport d'électricité à haute ou moyenne tension, les charges sont typiquement utilisées pour éviter les phénomènes d'accumulation de charges électriques (ces phénomènes nuisent sinon à termes à l'intégrité de la couche électriquement isolante, ce qui conduit à une diminution progressive du caractère isolant de la couche au cours du temps). L'incorporation de charges minérales dans une couche électriquement isolante permet notamment de diminuer la conductivité électrique et/ou d'augmenter la tension de claquage de la couche électriquement isolante.

Dans l'absolu, il est donc intéressant d'essayer d'incorporer dans la couche isolant d'un câble électrique des charges particulaires de faibles dimensions, notamment des charges minérales sous forme de particules de dimensions nanométriques.

Toutefois, en pratique, il se révèle généralement difficile, voire impossible, de disperser correctement des nanoparticules minérales dans une matrice polymère. Les charges minérales de faibles dimensions tendent en effet à s'agglomérer entre elles, ce qui ne conduit pas *in fine* aux performances recherchées, qui impliquent une dispersion optimales des charges minérales.

Par ailleurs, la manipulation de charges minérales de faibles dimensions s'avère en soi délicate, et ce tout particulièrement lorsque ces charges se présentes sous forme de particules de dimensions nanométriques. Les charges minérales de faibles dimensions se présentent en effet sous la forme de poudre de très faible densité, formées de particules avec un rapport surface/volume très élevé.

Outre les difficultés pratiques que présentent leur transport et leur dosage, la manipulation de charges minérales de faibles dimensions implique de prendre des précautions notamment du fait des répercussions négatives que peuvent avoir les nanoparticules sur la santé humaine.

Un but de la présente invention est de fournir une voie d'accès à des câbles électrique contenant une couche électriquement isolante incorporant des charges de faibles dimensions, mais en évitant les difficultés précitées.

A cet effet, il est proposé selon la présente invention de former *in situ* des charges minérales au sein de la couche électriquement isolante, à partir d'un ou de plusieurs précurseurs minéraux introduits avant l'application de cette couche.

Plus précisément, selon un premier aspect, la présente invention a pour objet un procédé de préparation d'un câble électrique comprenant une étape d'application d'une couche électriquement isolante autour d'au moins un élément électriquement conducteur allongé, ladite couche étant formée à partir d'une composition, caractérisé en ce que la composition comporte au moins un polymère et au moins un précurseur minéral, ledit précurseur minéral étant introduit dans la composition préalablement à l'étape d'application de la couche, ce précurseur minéral étant ensuite converti sous forme de particules minérales au sein de la couche.

Le ou les précurseurs minéraux qui sont employés selon l'invention conduisent à la formation de particules minérales dans la couche électriquement isolante appliquée. Cette formation de particules à partir du ou des précurseurs peut avoir lieu avec plus ou moins d'inertie pendant ou après l'application. Pour la suite de la demande on parlera par simplification de « précurseurs minéraux » au pluriel mais il est entendu que ce terme contient à la fois la notion selon laquelle la composition peut comprendre un seul précurseur minéral et la fois la notion selon laquelle la composition ne comporte qu'un seul précurseur minéral. Par ailleurs, et comme il a été indiqué plus haut, par « minéral », on entend un composé contenant des liaisons inorganiques.

On obtient ainsi une couche électriquement isolante en matériau composite : le au moins un polymère de la composition formant la matrice polymère dans laquelle sont dispersées les particules minérales obtenues par les précurseurs minéraux.

Optionnellement, pour 100 parts en poids de la composition, la composition comporte entre 80 et 98 parts en poids de polymère(s) et par exemple entre 90 et 97 parts en poids de polymère(s). En effet, la composition peut aussi bien comprendre un unique polymère qu'une combinaison d'au moins deux (voire plus) polymères différents. On comprendra que les précurseurs minéraux ne sont donc pas assimilables aux polymères précités dans ce paragraphe.

Avantageusement, les précurseurs minéraux peuvent être introduit dans la composition :
- sous forme liquide ; et/ou
- sous forme de particules solides non nanométriques.

Sous une telle forme, les précurseurs permettent d'éviter les problématiques d'agglomération et/ou de faible dispersion qui sont rencontrés avec des charges particulaires préformées de faibles dimensions telles que des nanoparticules.

Les précurseurs liquides et/ou sous forme de particules solides non nanométriques permettent aussi d'éviter d'avoir à mettre les précautions qui s'imposent en manipulant des nanoparticules minérales préformées.

Au sens de la présente description, l'expression « particule solide non nanométrique » désigne un objet solide dont toutes les dimensions sont supérieures à 500 nm, de préférence supérieures à un micron.

Par exemple, pour 100 parts en poids de la composition, la composition comporte entre 1 et 10 parts en poids de précurseur minéral et par exemple entre 1,5 et 5 parts en poids de précurseur minéral.

Dans le procédé de l'invention, les précurseurs minéraux sont introduits dans la composition polymère préalablement à l'application de la couche électriquement isolante autour de l'élément électriquement conducteur allongé. Pour ce faire, les précurseurs sont en général mélangés au moins un polymère de la composition en amont de l'application autour de l'élément conducteur électrique allongé.

Selon une première variante possible, la composition comprenant les précurseurs est d'abord préparée (selon un procédé comprenant typiquement au moins une étape de mélange du au moins un polymère avec les précurseurs minéraux) puis la composition ainsi obtenue est appliquée autour de l'élément allongé électriquement conducteur.

Selon une deuxième variante possible, l'étape de mélange du au moins un polymère avec les précurseurs minéraux peut avoir lieu juste avant l'application de la couche électriquement isolante autour de l'élément électriquement conducteur allongé.

Selon un mode de réalisation intéressant du procédé de l'invention, la couche électriquement isolante peut par exemple être appliquée par extrusion autour de l'élément électriquement conducteur allongé, à l'aide d'une extrudeuse munie d'une tête d'extrusion. L'extrudeuse est par exemple une extrudeuse bi-vis.

Dans ce cas de figure, les précurseurs minéraux sont typiquement introduits dans l'extrudeuse en amont de ladite tête d'extrusion. Les précurseurs minéraux peuvent être introduits plus proche d'une trémie d'alimentation de l'extrudeuse que de la tête d'extrusion. Les précurseurs peuvent par exemple être introduits :
- par injection dans un flux du au moins un polymère à l'état partiellement ou totalement fondu (ce qui est notamment bien adapté aux précurseurs sous forme liquide) et/ou
- en mélangeant tout ou partie des précurseurs avec des granulés du au moins un polymère solides en amont de la zone de fusion de la composition et/ou du au moins un polymère dans l'extrudeuse (ce qui est notamment bien adapté aux précurseurs solides).
En fonction de la zone où sont introduits les précurseurs dans l'extrudeuse, on peut ainsi se retrouver dans le cas de la première variante ou de la deuxième variante.

A titre d'exemple de précurseurs bien adaptés selon l'invention, on peut notamment citer les précurseurs ci-après.

Selon un mode de réalisation possible, les précurseurs employé dans le procédé de l'invention sont en tout ou partie des alcoxydes métalliques et/ou de silicium et/ou des sels métalliques. Ces alcoxydes métalliques et/ou de silicium et/ou sels métalliques peuvent notamment comprendre un ou des :
- alcoxydes métalliques et par exemple alcoxydes de titane, alcoxydes d'aluminium, alcoxydes de zinc ; et/ou
- alcoxydes de silicium et par exemple du tétra-alcoxysilane ; et/ou
- sels métalliques (ce par quoi les particules minérales comprennent des oxydes, des hydroxydes et/ou des oxyhydroxydes minéraux) et par exemple des sels de magnésium.

Selon un mode particulier, les précurseurs minéraux peuvent être introduits en solution dans la composition (optionnellement lorsque le au moins un polymère et/ou la composition est à l'état fondu). La solution peut ainsi par exemple contenir, en plus des précurseurs minéraux, de l'eau et /ou un catalyseur. Le catalyseur peut ainsi être un acide (comme par exemple une solution aqueuse d'acide chlorhydrique) ou une base (telle qu'une solution aqueuse d'hydroxyde de sodium, notamment). Si la solution contient le catalyseur, les précurseurs minéraux sont ainsi introduits conjointement au catalyseur dans la composition. La préparation d'une telle solution peut être effectuée dans des conditions ambiantes de température et de pression.

Si la solution aqueuse est acide, alors elle peut présenter un pH compris entre 1 et 4 et par exemple un pH de 2.

Le mélange eau et catalyseur peut présenter un débit massique compris entre 5 et 30 gramme par heure (g/h) et par exemple entre 8 et 12 g/h.

La solution aqueuse peut comporter un ou plusieurs composés additionnels par exemple pour améliorer la compatibilité entre les précurseurs minéraux et l'eau de la solution comme par exemple un composant porteur d'un groupe alcool comme par exemple de l'éthanol. Un tel composé additionnel peut présenter un débit massique compris entre 20 et 70 gramme par heure (g/h) et par exemple entre 30 et 60 g/h et par exemple entre 40 et 50 g/h.

Alternativement, de l'eau et/ou au moins un catalyseur peut être introduite séparément dans la composition avant l'application sur l'élément central électriquement conducteur, avant ou après l'introduction des précurseurs.

Dans le procédé de l'invention, les précurseurs minéraux peuvent ainsi typiquement être convertis en particules minérales selon un procédé sol/gel.

Selon un mode particulier, les précurseurs peuvent être convertis en l'absence d'eau par activation thermique.

Notamment lorsqu'elle met en œuvre un procédé de type sol/gel, la conversion des précurseurs minéraux en particules minérales peut s'accompagner de la formation de sous-produits de type eau et/ou alcools typiquement, qui sont liquide ou gazeux dans les conditions du procédé. De tels sous-produits peuvent conduire à une porosité de la couche électriquement isolante. Avantageusement, tout ou partie des sous-produits est extraits de la composition avant l'application sur l'élément central électriquement conducteur (par exemple par extraction sous vide en amont de la tête d'extrusion), ce par quoi la porosité de la couche électriquement isolante est diminuée.

Selon un mode particulier de réalisation, les précurseurs employés dans le procédé de l'invention sont en tout ou partie des alcoxydes de silicium répondant à la formule (I) suivante :

**Si(OR)₄** **(I)**

où chacun des groupes R (identiques ou différents, et généralement identiques) est un groupe hydrocarboné, de préférence un groupe alkyle comprenant typiquement de 2 à 4 atomes de carbone, ce par quoi les particules minérales sont des particules à base de silice.

Dans le procédé de l'invention, quelle que soit la nature des précurseurs employés, il peut se révéler intéressant que les précurseurs soient en tout ou partie porteurs de groupements fonctionnels non engagés dans la réaction de formation des particules minérales à partir des précurseurs, ce par quoi les particules minérales formées sont porteuses de ces groupements fonctionnels.

A titre non limitatif, de tels groupements fonctionnels optionnellement présent, peuvent par exemple être des groupes assurant une compatibilisation entre les particules minérales (par nature plutôt hydrophile) et les polymères de la composition (par nature plutôt hydrophobe). De tels groupements fonctionnels compatibilisant peuvent par exemple être des groupes hydrocarbonés, comme par exemple des groupes alkyle, par exemples des groupes alkyle.

Ainsi, selon un mode particulier, les précurseurs sont en tout ou partie des alcoxydes de silicium fonctionnalisés répondant à la formule (II) suivante :

**Si(OR)₄₋ₙ (R')ₙ** (II)

où
n est un entier compris entre 1 et 3, de préférence égal à 1 ou 2, typiquement égal à 1
chacun des 4-n groupes R (identiques ou différents, et généralement identiques, lorsqu'ils sont plusieurs) est un groupe hydrocarboné tel que défini pour le groupe R de la formule (I) précitée ;
chacun des n groupes R'(identiques ou différents, et généralement identiques, lorsqu'ils sont plusieurs) est un groupe fonctionnel, ce par quoi les particules minérales sont des particules à base de silice porteuses de groupements fonctionnels R'.

Avantageusement, les groupements R' des alcoxydes de silicium fonctionnalisés de formule (II) sont en tout ou partie des groupes hydrocarbonés, notamment des groupes alkyles comprenant entre 2 et 10 atomes de carbone, qui sont propres à assurer une compatibilité particulièrement efficaces entre les particules et les polymères de la couche électriquement isolante.

Selon un mode de réalisation intéressant, le procédé de l'invention met en œuvre des précurseurs qui comprennent un mélange d'alcoxydes de silicium fonctionnalisés ayant la formule (II) précitée et d'alcoxydes de silicium non fonctionnalisés ayant la formule (I) précitée. Dans ce cas, le rapport molaire (I)/(II) est de préférence compris entre 1 et 10.

Quelle que soit la nature des précurseurs employé dans le procédé de l'invention, les précurseurs peuvent présenter un débit massique compris entre 20 et 200 gramme par heure (g/h) et par exemple entre 30 et 100 g/h et par exemple entre 40 et 60 g/h.

Quelle que soit la nature des précurseurs employé dans le procédé de l'invention, le au moins un polymère peut présenter un débit massique compris entre 500 et 1500 gramme par heure (g/h) et par exemple entre 800 et 1200 g/h et par exemple entre 950 et 1050 g/h.

Quelle que soit la nature des précurseurs employé dans le procédé de l'invention, de préférence, le procédé comporte une étape préalable de mélange du précurseur minéral à une solution aqueuse (comprenant également optionnellement un catalyseur acide et/ou un composé porteur d'un groupe alcool tel que de l'éthanol). Le précurseur minéral peut par exemple être présent dans la solution aqueuse (contenant potentiellement au moins un catalyseur) selon un rapport molaire eau/précurseur compris entre 0.2 et 1.0et par exemple compris entre 0.7 et 0.9. Le mélange liquide ainsi obtenu (pouvant être appelé solution de précurseur minéral) est alors mélangé au moins un polymère de la composition. Par exemple, pour 100 parts en poids de la composition, la composition comporte entre 2 et 20 parts en poids de solution de précurseur minéral et par exemple entre 3 et 10 parts en poids de solution de précurseur minéral. Par exemple, pour 100 parts en poids de la composition, la composition comporte entre 80 et 98 parts en poids de polymère(s) et par exemple entre 90 et 97 parts en poids de polymère(s). De préférence, la durée de pré-hydrolyse des précurseurs minéraux dure entre 10 et 190 minutes et de préférence entre 50 et 170 minutes et de préférence entre 50 et 70 minutes. Par « durée de pré-hydrolyse » on entend la durée séparant le début du mélange des précurseurs minéraux avec la solution aqueuse avec le début dudit mélange liquide avec le au moins un polymère.

Quelle que soit la nature des précurseurs employé dans le procédé de l'invention, la composition peut, selon une première variante possible, être une composition thermoplastique non réticulable, ce par quoi la couche électriquement isolante appliquée est non réticulée.

Selon cette première variante, la composition peut par exemple être une composition thermoplastique. Au moins un polymère peut être à base d'au moins un homopolymère et/ou copolymère de propylène.

Alternativement, selon une seconde variante possible quelle que soit la nature des précurseurs employés, la composition peut, être une composition réticulable. Dans ce cas, le procédé comprend typiquement une étape de réticulation de la composition, généralement opérée après la conversion des précurseurs minéraux en particules minérales, ce par quoi la couche électriquement isolante appliquée est une couche réticulée incluant les particules minérales.

Selon cette deuxième variante, la composition peut par exemple être une composition réticulable. Au moins un polymère peut être à base d'un homopolymère et/ou copolymère d'éthylène, ce par quoi la couche électriquement isolante appliquée est une couche à base de polyéthylène réticulé (XLPE).

Selon un autre aspect, l'invention a pour objet les câbles électriques tels qu'on les obtient en mettant en œuvre le procédé de l'invention. Un câble tel qu'obtenu selon le procédé de l'invention comprend une couche électriquement isolante autour d'au moins un élément électriquement conducteur allongé, ladite couche électriquement isolante étant constituée par une composition incluant à titre de charges minérales des particules minérales obtenues par conversion de précurseurs mélangés à au moins un polymère avant la formation de la couche électriquement isolante.

Optionnellement, un câble électrique susceptible d'être obtenu selon le procédé de l'invention comprend une couche électriquement isolante autour d'au moins un élément électriquement conducteur allongé, ladite couche électriquement isolante étant constituée par une composition incluant à titre de charges minérales des particules minérales obtenues par conversion de précurseurs mélangés au moins un polymère avant la formation de la couche électriquement isolante.

Dans un câble tel qu'obtenu selon le procédé de l'invention, les particules minérales présentes dans la couche électriquement isolante, obtenues par conversion d'un précurseur minéral, sont des particules de faibles dimensions. Ces particules ont typiquement au moins une dimension inférieure ou égale à 100 nm.

Le procédé de l'invention, du fait qu'il part de précurseurs plus aisément dispersable dans le au moins un polymère, permet d'obtenir in fine une dispersion optimisée des charges minérales dans la couche électriquement isolante même lorsque ces charges minérales sont des particules de très faibles dimensions. Le procédé de l'invention permet notamment dans ce cadre d'éviter l'apparition d'agrégats tels qu'observés en partant de nanoparticules minérales préformées.

Les particules présentes dans la couche électriquement isolante d'un câble obtenu selon l'invention peuvent par exemple être :
- des particules (avantageusement non agglomérées) comprise dans une sphère de rayon inférieur à 100 nm, et qui sont avantageusement sensiblement isotropes ;
- des particules avec un facteur de forme supérieur à 1 (sous forme d'aiguilles par exemple), avantageusement non agglomérées, ayant une section droite circulaire ou non comprise dans un cercle de diamètre inférieur à 100 nm ;
- des particules (avantageusement non agglomérées) de type plaquettes, et ayant une épaisseur inférieur à 100 nm.

Quelle que soit leur taille et leur morphologie exacte, les particules minérales présentes dans la couche électriquement isolante d'un câble obtenues selon l'invention peuvent être des particules à base d'oxyde, hydroxydes et/ou hydroxydes minéraux, par exemple à base de silice.

Quelle que soit leur taille et leur morphologie exacte, les particules minérales peuvent être présentes dans la couche électriquement isolante selon une proportion telle que, pour 100 parts en en poids de la couche électriquement isolante, les particules minérales soient présentes entre 0.5 et 5 parts en poids et par exemple entre 1 et 3 parts en poids et par exemple entre 1.5 et 2.5 parts en poids.

Par ailleurs, les particules minérales présentes dans la couche électriquement isolante d'un câble obtenues selon l'invention peuvent être avantageusement porteuses de groupements fonctionnels, notamment des groupes hydrocarbonés, tels que des alkyles, assurant une compatibilisation entre les particules minérales et les polymères constitutifs de la matrice de la couche électriquement isolante.

Dans un câble électrique obtenues selon l'invention, couche électriquement isolante peut être une couche thermoplastique non réticulée, de préférence à base d'au moins un homopolymère ou copolymère de propylène.

Alternativement, dans un câble électrique obtenues selon l'invention, la couche électriquement isolante peut être une couche thermoplastique réticulée, de préférence à base de XLPE.

Un câble électrique tel qu'obtenu selon l'invention peut notamment être un câble d'énergie (câble pour le transport d'énergie), avantageusement destiné à véhiculer un courant direct à moyenne ou haute tension, par exemple dans les domaines du transport d'électricité aérien, sous-marin, terrestre, ou encore de l'aéronautique.

Le câble obtenu selon l'invention peut notamment être :
- un câble d'énergie à moyenne tension (dit « câble MV »), destiné à véhiculer un courant alternatif ou continu, typiquement continu, ayant une tension de 6 à 45-60 kV ; ou
- un câble d'énergie à haute tension (dit « câble HV »), destiné à véhiculer un courant alternatif ou continu, typiquement continu, ayant une tension supérieur à 60 kV, et pouvant aller jusqu'à 500-600 kV.

Notamment lorsqu'il est destiné à ces applications, le câble obtenu selon l'invention peut typiquement comprendre de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche électriquement isolante ; et
- de préférence (mais non nécessairement) une gaine de protection électriquement isolante entourant ladite couche semi-conductrice externe.

Les particules minérales obtenues selon l'invention à partir de précurseurs minéraux sont typiquement localisées dans la couche électriquement isolante prise en sandwich entre les couches semi-conductrices interne et externe. Selon un mode de réalisation envisageable, des charges minérales similaires peuvent être incorporées selon l'invention dans les couches semi-conductrices interne et externe.

Dans la présente invention, on entend par « couche semi-conductrice » une couche dont la conductivité électrique peut être d'au moins 1.10-9 S/m (siemens par mètre), de préférence d'au moins 1.10-3 S/m, et de préférence peut être inférieure à 1.103 S/m (à 25°C).

Le câble tel qu'obtenu selon l'invention à la présente invention peut éventuellement comprendre, en plus des couches précités, un écran métallique entourant la deuxième couche semi-conductrice. Dans ce cas, la gaine électriquement isolante entoure généralement ledit écran métallique. Le cas échéant, cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou d'un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique entourant la deuxième couche semi-conductrice. Ce dernier type d'écran permet notamment de faire barrière à l'humidité ayant tendance à pénétrer le câble d'énergie en direction radiale.

D'autres couches peuvent être présentes dans le câble selon l'invention, telles que des couches gonflantes en présence d'humidité qui peuvent par exemple être ajoutées entre la deuxième couche semi-conductrice et l'écran métallique, entre l'écran métallique et la gaine électriquement isolante lorsqu'ils existent, ces couches permettant d'assurer l'étanchéité longitudinale du câble d'énergie à l'eau.

### Exemple

La composition comporte :
- au moins un polymère de type polypropylène,
- au moins un précurseur minéral à base de tétra-alcoxysilane.

Pour étudier les propriétés d'une couche obtenue par une telle composition, des échantillons correspondants ont été préparés selon le protocole suivant.

Au cours d'une première étape, une solution aqueuse a été créée en mélangeant, dans des conditions ambiantes de température et de pression, le précurseur minéral à une solution aqueuse et par exemple une solution aqueuse acide. Le pH de la solution aqueuse est ajusté afin d'obtenir une valeur égale à 2. Le précurseur minéral a été introduit dans la solution aqueuse pour respecter un rapport molaire eau/précurseur de R₀ = 0,8. De préférence de l'éthanol a été incorporé également à la solution aqueuse pour respecter un rapport molaire éthanol/eau avec un rapport molaire de préférence de 1,6.

Au cours d'une deuxième étape, le polymère est incorporé, sous forme de granulés, dans une trémie d'alimentation d'une extrudeuse et la solution aqueuse de précurseur minéral obtenue à la première étape est également incorporé, sous forme liquide, dans l'extrudeuse mais en aval de la trémie d'alimentation. La solution aqueuse est préférentiellement introduite plus proche de la trémie d'alimentation que de la tête d'extrusion. Le précurseur minéral est ainsi introduit dans le polymère lorsque celle-ci est partiellement ou totalement fondue.

La composition est telle que pour 100 parts en poids de composition, la composition comporte 10 parts en poids de la solution aqueuse de précurseur minéral et 90 parts en poids du polymère.

A l'issue de la deuxième étape d'extrusion, on obtient des granulés de la composition.

Au cours d'une troisième étape on moule la composition en formant une plaque (par exemple via une machine bicylindre et/ou une presse telle qu'une presse chauffante).

Après refroidissement et démoulage, la plaque est coupée pour réaliser les échantillons sur lesquels des tests sont effectués.

Les débits massiques des différents composés de la composition sont définis dans le tableau 1.

**[Tableau 1]**

| Composé | Polymère | Précurseur minéral | Eau + catalyseur acide | Ethanol |
|---|---|---|---|---|
| Débit massique (g/h) | 1000 | 54,3 | 10,88 | 43,5 |

Les échantillons sont donc formés d'un matériau composite présentant une matrice polypropylène et des charges dispersées dans la matrice. De la sorte, les échantillons présentant, pour 100 parts en poids d'échantillon, 2 parts en poids de silice.

Les inventeurs ont souhaité étudier l'influence de la durée de l'étape de pré-hydrolyse mais également étudier l'influence de l'ajout d'un composant compatibilisant ainsi que l'influence d'un post-traitement thermique par exemple dans le but de réduire le temps de pré-hydrolyse de la solution de précurseur inorganique.

A cet effet, des échantillons formées à partir de compositions C1 à C7 ont été fabriquées selon ce qui a été dit aux paragraphes précédents.

La seule différence entre les échantillons/compositions C1 à C concerne la durée de l'étape de pré-hydrolyse.

La seule différence entre les échantillons/compositions C1 et C6 est que la composition C6 inclut également un composé additionnel à titre de compatibilisant. Un tel composé est par exemple un polymère additionnel et par exemple un polymère à base de polypropylène greffé anhydre. Par exemple, la composition que peut comprendre, pour 100 parts en masse de polymères, entre 1 et 10% en masse de polypropylène greffé anhydride, le reste étant du polypropylène non greffé (sous la forme d'un homopolymère et/ou d'un copolymère de propylène).

La seule différence entre les échantillons/compositions C1 et C7 est que les échantillons de la composition C7 ont subi un post-traitement thermique. Ce post-traitement thermique peut être effectué sous vide pendant 2 à 15 jours. La température de ce post-traitement thermique peut être comprise entre 100 et 150 degrés Celsius et peut-être par exemple de 120 degrés Celsius.

Des échantillons dans un premier matériau de référence ont également été préparés de la même manière que ce qui a été dit précédemment, à la différence que le précurseur minéral et la solution aqueuse ont été introduits de manière séparée directement dans l'extrudeuse. Il n'y a donc pas eu de pré-hydrolyse du précurseur minéral dans ce cas de figure (la composition correspondante - que l'on nommera C0 par la suite - ne comporte pas non plus d'éthanol puisque le précurseur minéral et la solution aqueuse ont été introduit de manière séparée dans l'extrudeuse).

Des échantillons dans un deuxième matériau de référence ont également été préparés de la même manière que ce qui a été dit précédemment, à la différence que la composition correspondante (que l'on nommera CPP par la suite) ne comporte aucun précurseur minéral.

Les paramètres correspondants sont représentés au tableau 2 ci-dessous.

**[Tableau 2]**

| | Post-traitement thermique | Compatibilisant | Durée de l'étape de pré-hydrolyse |
|---|---|---|---|
| C0 | / | / | Pas de pré-hydrolyse |
| C1 | / | / | De 10 à 30 minutes |
| C2 | / | / | De 30 à 50 minutes |
| C3 | / | / | De 50 à 70 minutes |
| C4 | / | / | De 170 à 190 minutes |
| C5 | / | / | De 350 à 370 minutes |
| C6 | / | Présence d'un compatibilisant | De 10 à 30 minutes |
| C7 | Post-traitement thermique | / | De 10 à 30 minutes |

Les tests suivant ont effectués sur les échantillons issus des différentes compositions précitées :
- le taux de conversion en particules minérales (%) qui est mesuré par analyse thermogravimètrique (ATG) selon la norme ISO 11358-1,
- le diamètre de Feret moyen (micromètres) qui est mesurée par analyse statistique d'image,
- la conductivité électrique volumique *σ* (S.cm⁻¹) qui est mesurée selon la norme IEC 62631-3.

Les résultats de ces tests sont présentés dans le Tableau 3 ci-dessous.

**[Tableau 3]**

| Composition | Conversion (%) | σ (S.cm-1) | Diamètre de Feret moyen (µm) |
|---|---|---|---|
| **CPP** | / | 4,7 x 10⁻¹⁷ ± 0,2 x 10⁻¹⁷ | / |
| C0 | 66 ± 7 | 3,5 x 10⁻¹⁶ ± 2 x 10⁻¹⁶ | 2,8 ± 5 |
| C1 | 77 ± 5 | 3 x 10⁻¹⁶ ± 1 x 10⁻¹⁶ | 0,8 ± 2 |
| C2 | 75 ± 1 | 2 x 10¹⁶ ± 1 x 10⁻¹⁶ | 3,2 ± 3 |
| C3 | 83 ± 10 | 2 x 10⁻¹⁷ ± 1 x 10⁻¹⁷ | 4,5 ± 10 |
| C4 | 103 ± 7 | 3 x 10⁻¹⁷ ± 0,2 x 10⁻¹⁷ | 18 ± 36 |
| C5 | 109 ± 5 | - | 14±21 |
| **C6** | 85 ± 1 | 1 x 10⁻¹⁷ ± 1 x 10⁻¹⁷ | 1 ± 2 |
| C7 | g77 ± 5 | 2 x 10⁻¹⁷ ± 1 x 10⁻¹⁷ | 3,2 ± 3 |

On note ainsi que la composition C3 présente un très bon taux de conversion en particules minérales, que celles-ci sont de petites dimensions et que la valeur de la conductivité électrique de cette composition C3 s'avère relativement faible. La composition C7 est également intéressante, bien qu'elle comporte une étape supplémentaire de traitement thermique. La composition C6 est également intéressante.

Bien entendu, l'invention n'est pas limitée au mode de réalisation décrit mais englobe toute variante entrant dans le champ de l'invention telle que définie par les revendications.

La composition pourra comporter un ou plusieurs agents compatibilisant. Comme indiqué plus haut, l'agent comptabilisant pourra être formé par les particules minérales elles-mêmes. Dans ce cas, les particules minérales pourront être porteuses de groupements fonctionnels pouvant assurer une compatibilité entre les particules minérales et les polymères constitutifs de la couche électriquement isolante. En remplacement ou en complément, cela pourra être au moins l'un des polymères de la composition qui jouera le rôle d'agent compatibilisant. Par exemple la composition pourra inclure au moins un polymère (minoritairement présent en masse dans la composition vis-à-vis des autres polymères) qui favorise la compatibilité entre le polymère majoritairement présent dans la composition. Un tel polymère minoritairement présent pourra par exemple être un polypropylène greffé comme par exemple un polypropylène greffé anhydride comme par exemple un polypropylène greffé anhydride maléique. Par exemple, la composition peut comprendre, pour 100 parts en masse de composition, entre 1 et 10% en masse de polypropylène greffé anhydride et par exemple entre 3 et 6% en masse de polypropylène greffé anhydride (le reste des polymères de la composition étant du polypropylène non greffé - par exemple sous la forme d'un homopolymère et/ou d'un copolymère de propylène). En remplacement ou en complément, l'agent compatibilisant pourra également être un composé additionnel au(x) polymère(s) et précurseur(s) de la composition. Un tel composé additionnel pourra par exemple posséder de longues chaînes alkyles compatibles avec le(s) polymère(s) et/ou des groupements alkoxy. Cet agent compatibilisant peut être par exemple par exemple optionnellement ajouté à la solution de précurseur inorganique. Ce composé peut être par exemple le n-octyltriéthoxysilane. Par exemple, la composition peut comprendre entre 2 et 15 parts en masse de n-octyltriéthoxysilane pour 100 parts en masse de précurseur minéral.

Bien qu'ici il a toujours été proposé que la composition comprenne un unique type de polymère comme par exemple du polypropylène ou bien du polyéthylène, la composition pourra contenir plusieurs polymères différents comme un mélange de polypropylène et de polyéthylène et/ou un mélange de polypropylène (sous la forme d'un homopolymère et/ou d'un copolymère de propylène) avec au moins un polypropylène greffé comme par exemple un polypropylène greffé anhydride comme par exemple un polypropylène greffé anhydride maléique. Par exemple, la composition peut comprendre, pour 100 parts en masse de la composition, entre 1 et 10% en masse de polypropylène greffé anhydride et par exemple entre 3 et 6% en masse de polypropylène greffé anhydride (le reste des polymères de la composition pouvant alors être du polypropylène non greffé - sous la forme d'un homopolymère et/ou d'un copolymère de propylène).

Comme proposé plus haut, après l'étude d'extrusion, la couche obtenue par une composition selon l'invention pourra ou non subir un post-traitement thermique. Ce post-traitement thermique peut être effectué sous vide pendant 2 à 15 jours. La température de ce post-traitement thermique peut être comprise entre 100 et 150 degrés Celsius et peut-être par exemple de 120 degrés Celsius.

## Revendications

1. Procédé de préparation d'un câble électrique comprenant une étape d'application d'une couche électriquement isolante autour d'au moins un élément électriquement conducteur allongé,
ladite couche étant formée à partir d'une composition, **caractérisé en ce que** la composition comporte au moins un polymère et au moins un précurseur minéral, ledit précurseur minéral étant introduit dans la composition préalablement à l'étape d'application de la couche, ce précurseur minéral étant ensuite converti sous forme de particules minérales au sein de la couche.

2. Procédé selon la revendication 1 où le précurseur est introduit sous forme de liquide et/ou de particules solides non nanométriques dans la composition.

3. Procédé selon la revendication 2, où la couche électriquement isolante est appliquée par extrusion autour de l'élément électriquement conducteur allongé, à l'aide d'une extrudeuse munie d'une tête d'extrusion, et où le précurseur minéral est introduit dans l'extrudeuse en amont de ladite tête d'extrusion, par exemple par injection dans un flux de composition et/ou du au moins un polymère à l'état partiellement ou totalement fondu et/ou en mélangeant tout ou partie du précurseur avec des granulés du au moins un polymère solide en amont de la zone de fusion de l'extrudeuse.

4. Procédé selon l'une des revendications 1 à 3, où tout ou partie du ou des précurseur sont des alcoxydes métalliques ou des alcoxydes de silicium ou des sels métalliques, notamment des alcoxydes de silicium ; des alcoxydes de titane, d'aluminium ou de zinc ; ou des sels de magnésium, ce par quoi les particules minérales comprennent des oxydes, des hydroxydes et/ou des oxyhydroxydes minéraux.

5. Procédé selon l'une des revendications 1 à 4, où le précurseur est converti en particules minérales selon un procédé sol/gel.

6. Procédé selon la revendication 5 où le précurseur minéral est introduit en solution dans l'eau, ou avec de l'eau introduite séparément avant ou après l'introduction des et/ou avec un catalyseur introduit conjointement à ou avant ou après l'introduction du précurseur, par exemple un acide ou une base.

7. Procédé selon la revendication 5 ou 6, où les sous-produits gazeux ou liquides présents à l'issue du procédé sol/gel sont extraits de la composition avant l'application de la couche électriquement isolante, par exemple par extraction sous vide en amont de la tête d'extrusion.

8. Procédé selon la revendication 6 où tout ou partie du précurseur est un alcoxyde de silicium répondant à la formule (I) suivante :
**Si(OR)₄** (I)
où chacun des groupes R (identiques ou différents, et généralement identiques) est un groupe hydrocarboné, de préférence un groupe alkyle, ce par quoi les particules minérales sont des particules à base de silice.

9. Procédé selon l'une des revendications 1 à 7, où tout ou partie du précurseur est porteur de groupements fonctionnels non engagés dans la réaction de formation des particules minérales à partir des précurseurs, ce par quoi les particules minérales formées sont porteuses de ces groupements fonctionnels.

10. Procédé selon la revendication 8, où tout ou partie du précurseur est un alcoxyde de silicium fonctionnalisé répondant à la formule (II) suivante :
**Si(OR)₄₋ₙ (R')ₙ** (II)
où
n est un entier compris entre 1 et 3, de préférence égal à 1 ou 2, typiquement égal à 1
chacun des 4-n groupes R (identiques ou différents, et généralement identiques, lorsqu'ils sont plusieurs) est un groupe hydrocarboné tel que défini pour le groupe R de la formule (I) de la revendication 8
chacun des n groupes R'(identiques ou différents, et généralement identiques, lorsqu'ils sont plusieurs) est un groupe fonctionnel, ce par quoi les particules minérales sont des particules à base de silice porteuses de groupements fonctionnels R'.

11. Procédé selon la revendication 10, où tout ou partie des groupements R' sont des groupes hydrocarbonés, notamment des groupes alkyles.

12. Procédé selon l'une des revendications précédentes, où le précurseur comprend un mélange d'alcoxydes de silicium fonctionnalisés de formule (II) telle que définie dans la revendication 10 et d'alcoxydes de silicium fonctionnalisés de formule (I) telle que définie dans la revendication 8.

13. Procédé selon l'une des revendications 1 à 12 où la composition est une composition thermoplastique non réticulable et où la couche électriquement isolante appliquée est non réticulée.

14. Procédé selon la revendication 13 où la composition est une composition thermoplastique à base d'au moins un homopolymère ou copolymère de propylène.

15. Procédé selon l'une des revendications 1 à 12 où la composition est une composition réticulable, et où le procédé comprend une étape de réticulation de la composition réticulable, généralement après la conversion du précurseur minéral en particules minérales, ce par quoi la couche électriquement isolante appliquée est une couche réticulée incluant les particules minérales.

16. Procédé selon la revendication 15 où la composition est une composition réticulable à base d'un homopolymère ou copolymère d'éthylène, ce par quoi la couche électriquement isolante appliquée est une couche à base de polyéthylène réticulé (XLPE).

17. Câble électrique susceptible d'être obtenu selon le procédé de l'une des revendications 1 à 16 comprenant une couche électriquement isolante autour d'au moins un élément électriquement conducteur allongé, ladite couche électriquement isolante étant constituée par une composition incluant à titre de charges minérales des particules minérales obtenues par conversion d'au moins un précurseur introduit dans la composition avant la formation de la couche électriquement isolante.

18. Câble électrique selon la revendication 17, où les particules minérales ont au moins une dimension inférieure ou égale à 100 nm

19. Câble électrique selon l'une des revendication 17 ou 18, où les particules minérales sont des particules à base d'oxyde, hydroxydes et/ou hydroxyde minéraux, par exemple à base de silice.

20. Câble électrique selon l'une des revendication 17 à 19, où les particules minérales sont porteuses de groupements fonctionnels, notamment des groupes hydrocarbonés, tels que des alkyles, assurant une compatibilité entre les particules minérales et les polymères constitutifs de la couche électriquement isolante.

21. Câble électrique selon l'une des revendication 17 à 20, où la couche électriquement isolante est une couche thermoplastique non réticulée, de préférence à base d'au moins un homopolymère ou copolymère de propylène.

22. Câble électrique selon l'une des revendication 17 à 20, où la couche électriquement isolante est une couche thermoplastique réticulée, de préférence à base de XLPE.

23. Câble électrique selon l'une des revendication 14 à 19, qui est un câble d'énergie destiné à véhiculer un courant direct à moyenne ou haute tension.
